# EUROPEAN PATENT SPECIFICATION

(11) **EP 3 124 163 B1**
(45) Date of publication and mention of the grant of the patent: **22.04.2020**
(21) Application number: 15178871.8
(22) Date of filing: 29.07.2015
(51) Int. Cl.: B23K 26/04, B23K 26/08, B23K 26/082

(54) **SYSTEM AND METHOD FOR LASER PROCESSING**
VERFAHREN UND VORRICHTUNG ZUR LASERBEARBEITUNG
SYSTÈME ET PROCÉDÉ DE TRAITEMENT LASER

(43) Date of publication of application: 01.02.2017
(73) Proprietor: Yaskawa Slovenija d.o.o, 1310 Ribnica (SI)
(72) Inventor: Jezersek, Matija, 1235 Radomlje (SI); Mozina, Janez, 4240 Radovljica (SI); Diaci, Janez, 3311 Sempeter v Savinjski dolini (SI); Kosler, Hubert, 1316 Ortnek (SI)
(74) Representative: Lucke, Andreas

(56) References cited:
- EP-A2- 1 219 380
- DE-A1-102010 005 896
- DE-B3-102010 060 162
- GB-A- 1 575 054
- JP-B2- 4 418 282
- US-A- 4 907 169
- US-A1- 2012 015 318

## Description

### FIELD OF THE INVENTION

The present invention relates to laser processing, in particular to a system and a method for laser processing of a workpiece.

### BACKGROUND

Laser processing, such as laser welding, laser cutting, laser marking and laser engraving, is performed by systems using a laser scanning system, such as a scanning head, to scan a laser beam over a workpiece.

In order to monitor the laser processing, it is known to use systems comprising a camera. In some systems, the camera is arranged on a center beam axis, which is defined by the laser scanning system. The center beam axis defines a path, i.e. a direction, orientation and position, of a central beam, which can be provided in a center position or center setting of a deflection optics of the scanning system.

A camera position on the center beam axis has the disadvantage that the view of the camera on the workpiece portion being processed may be shielded by melt expulsions and/or plasma plumes created during laser processing. This disadvantage can be avoided, by using an inclined orientation for the camera such that the viewing direction of the camera is inclined with respect to the scanned laser beam and with respect to the center beam axis. An example for a laser welding device with an inclined camera is provided in US 2006/0006156 A1.

In order to obtain process results of a high quality, e.g. in terms of weld strength, visual appearance or aesthetic and functionality, it is essential, that the laser beam is scanned precisely with respect to a desired predetermined path and that the predetermined path has been correctly and precisely defined with respect to the workpiece. One of the most common ways for generating a path for the laser beam, i.e. a sequence of settings which allows for scanning the laser beam along said path, is to teach the system by use of a pilot beam or guiding beam. In such a procedure the pilot beam is moved to specific landmarks or reference points on the workpiece and the corresponding setting for the laser beam which is used for laser processing is determined. The accuracy of a visual assessment of the guiding beam positioning by eye is limited (naked eye resolves around 0.25 mm) and the corresponding path generation is time consuming.

DE 10 2010 005 896 A1 discloses a laser welding robot for connecting workpieces by means of a weld. On an arm of the welding robot, a laser welding device is provided, which comprises a coupling arrangement for coupling laser light and a laser head. The laser head comprises a mirror scanner including a tiltable mirror and at least one focusing optics having a positioning apparatus, allowing for focusing and positioning the laser beam on the component. The laser welding device of the laser welding robot comprises at least one electronic control for the components forming the laser head. The laser head is suitable for being arranged at a distance of more than 250 mm from the joint of the workpieces to be welded. A detecting apparatus is provided in or on the laser head for determining a position of the joint of the workpieces relative to a position of a laser beam focus, wherein the detecting apparatus is operatively coupled with the electronic control of the laser head. This document further discloses a method of joining workpieces using such laser welding robot.

EP 1 219 380 A2 discloses a laser welding method and a corresponding laser welding apparatus. In the laser welding method, a weld portion detector and a laser beam projector disposed a predetermined distance behind the weld portion detector are moved together. The weld portion detector detects a weld line and the laser beam projector projects on the weld line detected by the weld portion detector for laser welding. Pieces of data on weld positions sequentially detected by the weld portion detector are stored sequentially in combination with times when the pieces of data on the weld positions are obtained and moving speeds of the weld portion detector in the memory. A time when the weld portion detector passes a point at which the laser beam projector has just arrived is calculated on the basis of the times and the moving speeds stored in the memory. The laser beam projector projects a laser beam on a weld position detected at the thus calculated time.

GB 1 575 054 discloses an apparatus for high precision laser beam processing of a workpiece that comprises a processing laser for projecting a processing laser beam via a focusing optical system, a beam splitter, and a laser beam deflection control optical system. The apparatus further comprises a measuring laser for projecting a measuring beam that is gated into a path of the processing laser beam by the beam splitter via a focusing optical system. Laser processing by the device is made by scanning a known processing surface of the workpiece with the measuring laser beam, determining position coordinates of the workpiece surface relative to central point coordinates of an effective surface of the processing laser, and directing laser light onto the surface of the workpiece based on said coordinates.

JP 4 418 282 B2 discloses a laser beam imaging device that comprises a laser light source for generating a laser beam for processing that is controlled by a telescope optical system, a polarising plate, a mirror, and an object lens. Further, the laser beam imaging device comprises a light source for generating a laser beam for measuring, wherein the laser beam for measuring is adjusted by a shaping device and a half mirror before being transmitted through the mirror and the object lens. The laser beam for measuring and the laser beam for processing are always directed in the same direction while the workpiece is moved with respect to the laser beams by a moving stage in which the workpiece is arranged.

US 2012/015318 A1 discloses a laser processing device in which a laser radiation source can be configured for emitting light of different pulse peak intensities so as to provide laser light for a diagnostics mode and laser light for a therapy mode.

### SUMMARY OF THE INVENTION

The object of the present invention is to provide a system and a method for laser processing, which allow for a fast, accurate and efficient laser processing.

This object is solved by the independent claims. Further developments and advantageous embodiments are defined in the dependent claims.

The present invention relates to a system for laser processing of a workpiece, wherein the system comprises a laser source, a laser scanning system, a camera, a robot, a processing unit and a control unit.

The laser source is configured for generating a working beam. The laser source can be further configured for generating a measurement beam. Alternatively, the system comprises a further optical source for generating the measurement beam. Because the system is configured for generating two different beams, namely the working beam and the measurement beam, the working beam can be used for laser processing, while the measurement beam can be used for generating path data based on which the system can be controlled for laser processing, as explained further below.

The laser scanning system defines a center beam axis and is both configured for scanning the measurement beam over the work piece and for scanning the working beam over the work piece. Hence, the same laser scanning system can be used for generating path data based on scanning the measurement beam and for laser processing based on scanning the working beam.

The camera is inclined to the center beam axis and spaced from the center beam axis. According to this arrangement, the camera can have a viewing direction on a workpiece which is tilted or inclined with respect to the measurement beam when being scanned over the work piece. This allows for determining the position and the orientation of the workpiece in three-dimensional space with respect to the system e.g. by triangulation. This would not be possible, if the viewing direction of the camera and the direction of the measurement beam would coincide.

Due to its inclined and spaced arrangement, the camera is also suitable for monitoring the laser processing from the side. This allows for performing the monitoring even in case of the occurrence of plasma plumes or melt expulsions which usually extend in a vertical direction, i.e. in a direction corresponding to or close to the center beam direction. Because the camera is spaced from and inclined to this direction, the view of the camera on the workpiece portion of interest is not shielded.

The inclined and spaced orientation of the camera allows further for determining a vertical position or distance of the processing location on the workpiece from the laser scanning system.

Further, the camera is arranged in a fixed relation to the laser scanning system and the robot is configured for moving the laser scanning system. Hence, the scanning of the working beam and of the measurement beam can be performed by the laser scanning system and the robot in combination. This allows for a faster scanning and for increasing the scanning range, wherein the scanning range is increased both in terms of a scannable area and in terms of a scannable orientation of a surface portion of the workpiece with respect to the system. The fixed relation between the camera and the laser scanning system thereby ensures that a movement of the laser scanning system caused by the robot coincides with a corresponding movement of the camera. Accordingly, the above orientation of the camera and the above resulting advantages can be provided at a high scanning speed and for a large scanning area.

The processing unit is configured to determine a relation between a setting of the system and a resulting position of a focus of the working beam or of a projection of the working beam relative to the workpiece for that setting, based on a spatial relation between the working beam and a measurement beam and based on a camera image of the workpiece taken when the workpiece is scanned by the measurement beam. The processing unit is further configured to generate path data based on the aforementioned determined relation and based on predefined criteria. Path data are data which allow controlling the setting of the system such that the working beam is scanned over the workpiece along a path which is defined by the path data. Accordingly, the path data must not necessarily comprise the three-dimensional coordinates of the desired path but corresponding information which allows for adjusting the setting of the system, such that the working beam is scanned along a corresponding path with respect to the work piece. Such corresponding information can comprise, for example, a sequence of system settings, which allows scanning the working beam along the corresponding path. Since the determined relation comprises positional information of the workpiece, the remaining criteria for generating the scanning path with respect to the workpiece can be predefined, i.e. can be defined in advance and independently from the shape and the relative position and orientation of the workpiece with respect to the system. This allows to predefine certain criteria for a scanning path independently from any specific workpiece and to use these criteria to generate a path for a workpiece having a specific shape and a specific relative orientation and position with respect to the system. Hence, the information required to generate the path can be partially obtained by the system itself by using the measurement beam and the camera without need to collect information about the specific workpiece, such as about shape, orientation or position. Therefore, the system can generate the path data automatically as soon as the workpiece to be processed is provided below the laser scanning system. Because the path data can be generated automatically for the positioned specific workpiece of the generated path is independent from any positioning of the workpiece and does not rely on external workpiece information. Therefore, the processing can be comparatively, accurate and fast without need for a time consuming preparation of the laser processing.

The control unit is configured to control the setting of the system for scanning the working beam over the workpiece according to the path data for processing the material of the workpiece. Because the system allows to generate the path data directly before the laser processing based on a measurement performed by the same system which is used for the laser processing and based on the same workpiece in the same orientation and position as used for the laser processing, the laser processing can be very accurate and can have a high quality.

Accordingly, the system allows for a fast and accurate laser processing and for a monitoring of the processing, wherein the same scanning system is used for scanning of the measurement beam and for scanning of the working beam and the same camera is used for monitoring and for path generation. By using the laser scanning system and the camera for different functions, it is not necessary that the system must comprise further components for performing these functions. This efficient use of the system components allows to provide the above functions at comparatively low cost.

Laser processing can comprise at least one of laser welding, laser cutting, laser marking and laser engraving.

The predefined criteria may comprise predefined features in one or more images of the workpiece, wherein the one or more images can be taken by the camera when the workpiece is illuminated or scanned with the measurement beam. Alternatively or additionally, the predefined criteria can comprise predefined path information. Because the predefined features and/or the predefined path information are predefined, it is not necessary that they comprise any information about the geometry of the workpiece and/or the position and orientation of the workpiece with respect to the system. The predefined path information can be independent from any image taken by the camera.

The setting of the system can comprise a setting of a deflection optics of the laser scanning system, a setting of a focusing optics of the laser scanning system and/or a setting of the robot. The setting of the deflection optics and the robot can determine the position of a projection of the measurement beam on the workpiece. The position of the projection can be changed by changing the setting of the deflection optics and/or of the robot, i.e. by moving the deflection optics and/or by using the robot to move the laser scanning system. An additional control of the focusing optics is not necessary but can result in a path which does not necessarily lie on the surface of the workpiece but which can also be arranged above or below the surface. In this case the path can correspond to the path of the focus of the working beam can be above or below the surface of the workpiece, while the projection of the working beam on the workpiece necessarily lays on the surface of the workpiece.

According to a preferred embodiment, the system further comprises a monitoring unit for monitoring the laser processing by using the camera. Such a system can be used for fast and accurate laser processing as well as for monitoring the laser processing by sharing system components without need for a further optical sensing unit and without need for a time consuming rebuilt of the system, e.g. by interchanging of components.

According to a further embodiment, the system further comprises a process control unit for controlling the focusing and/or the power of the working beam based on a monitoring of the monitoring unit. This allows for improving the process quality in real time, i.e. during the laser processing, in direct response to a monitoring, which detects that the process deviates from a desired process.

The processing unit can further be configured to determine a three-dimensional (3D) topology of the workpiece based on a spatial relation between the measurement beam and the camera and based on at least one camera image of the workpiece taken when the measurement beam is scanned over the workpiece. The determination of the 3D topology is possible, because the camera is inclined to the center beam axis and is spaced from the center beam axis. This allows for comparing a 3D topology of the unprocessed and processed workpiece before and after the laser processing.

According to a further embodiment, the system comprises an evaluation unit for comparing a 3D topology of the workpiece before and after the laser processing. This embodiment allows for a fast and easy assessment of the laser processing.

The system may further comprise a display unit for visualizing a difference between the compared topologies. Accordingly, the quality of the laser process can be visualized and assessed based on a visualized appearance.

Preferably, the power of the measurement beam is lower than the power of the working beam. This can ensure that the workpiece is not processed or damaged by the measurement beam and is only be processed by the working beam.

Preferably the system is arranged, such that for a given setting of the system the measurement beam and the working beam exit the laser scanning system on the same path. Hence, the measurement beam and the working beam would coincide after leaving the laser scanning system, if these beams would be provided simultaneously. In this arrangement, the before-mentioned relation can be determined quite easily because it is not necessary to transform the setting for the measurement beam to a setting for the working beam.

In one or more of the before-mentioned embodiments, the laser source can be a fiber laser and the measurement beam and the working beam can use a common fiber. This ensures an accurate alignment of the measurement beam path and the working beam path, which makes the determination of the path data, as mentioned before, easier and which can improve the accuracy of the path data. It may not be necessary to adjust further optical components to a align the measurement beam and the working beam.

The present invention is further related to a method for laser processing of a workpiece by use of a system comprising a laser scanning system, a camera and a robot, wherein the camera is inclined to a center beam axis defined by the laser scanning system, is spaced from the center beam axis and is arranged in a fixed relation to the laser scanning system, wherein the method comprises:
- providing a workpiece below the laser scanning system,
- scanning or illuminating the workpiece with a measurement beam by using the laser scanning system,
- during said scanning or illuminating, acquiring images of the workpiece by using the camera,
- determining a relation between a setting of the system and a resulting position of a focus of the working beam or of a projection of the working beam relative to the workpiece for that setting, wherein the relation is determined based on a relation between the measurement beam and the working beam and based on the images acquired by the camera,
- generating path data based on the relation determined and based on predefined criteria,
- controlling the setting of the system for scanning the working beam over the workpiece according to the path data for processing the material of the workpiece.

The steps of determining a relation and generating path data can comprise the following steps:
- discerning features in one or more images of the workpiece, wherein said one or more images are taken by said camera, when the workpiece is illuminated or scanned with the measurement beam,
- determining from said discerned features a characteristic feature based on a comparison with a predefined feature,
- determining a setting of the system for the working beam, wherein said setting is determined based on a position of the characteristic feature in said one or more images taken by the camera.

Preferably, the steps of scanning the measurement beam and/or the working beam are performed by the laser scanning system and by the robot. If the laser scanning system and the robot are used in combination for the scanning, the scanning range and the scanning speed can be increased.

### BRIEF DESCRIPTION OF THE DRAWINGS

Further details and advantages of the present invention will become apparent from the following description, in which illustrative embodiments are described with reference to the appendent drawings, in which
- Fig. 1: illustrates a system according to an embodiment of the present invention,
- Fig. 2: illustrates an image acquired with a camera of the system of Fig. 1,
- Fig. 3: shows a superposition of multiple images acquired by the camera of the system of Fig. 1,
- Fig. 4: is a flow chart illustrating a method according to an embodiment of the present invention,
- Fig. 5: illustrates steps of the method illustrated in Fig. 4,
- Fig. 6: illustrates a monitoring of a laser processing using the system of Fig. 1,
- Fig. 7: illustrates images taken by the camera of the system of Fig. 1, and
- Fig. 8: illustrates the scanning of a measurement beam and a working beam.

In the drawings, same reference signs are used to designate same features.

### DETAILED DESCRIPTION OF PREFERRED EMBODIMENTS

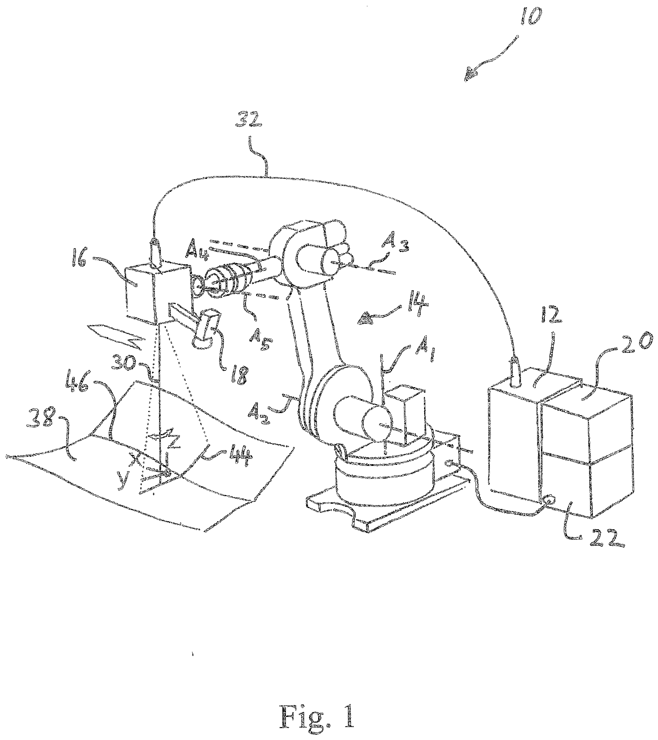

Fig. 1 shows a system 10 according to an embodiment of the present invention. The system 10 comprises a laser source 12, a robot 14, a laser scanning system having the form of a laser scanning head 16, a camera 18, a processing unit 20 and a control unit 22.

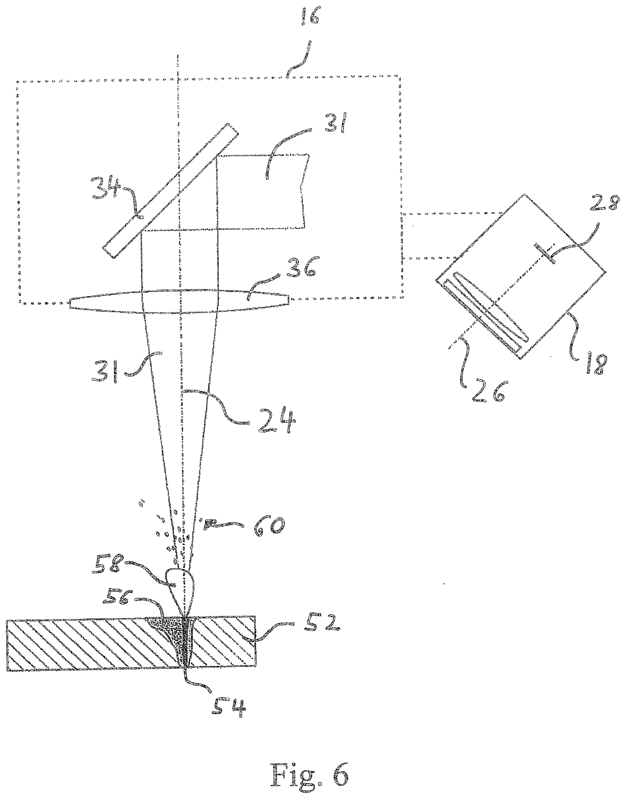

As shown in Fig. 6, the laser scanning head 16 defines a center beam axis 24 and the camera 18, which is arranged in a fixed relation to the laser scanning head 16, defines a viewing axis 26. The camera 18 or the viewing axis 26 thereof is inclined with respect to the center beam axis 24. Additionally, the camera 18 or a cross section of the viewing axis 26 and am image plane 28 of the camera 18 is spaced from the center beam axis 24.

The laser source 12 of the system 10 is configured to generate a measurement beam 30 and a working beam 31 which can be provided via an optical fiber 32 to the laser scanning head 16.

The scanning head 16 is mounted to the robot 14, wherein the robot allows for a rotation around several axes A₁ to A₅, as is illustrated in Fig. 1. This allows for translating the scanning head 16 in the example of Fig. 1 in three dimensions while keeping the orientation of the scanning head 16 within the XYZ coordinate system indicated in Fig. 1. Additionally, the robot 14 allows for changing the orientation of the scanning head within the XYZ coordinate system indicated in Fig. 1.

The scanning head 16 includes a deflection optics 34 and a focusing optics 36. The scanning of the measurement beam 30 and the working beam 31 over the workpiece 38 can be performed by moving the deflection optics 34 and/or by using the robot 14 to move the scanning head 16. By additional use of the robot larger areas and more complex shapes can be scanned as compared to systems which only use a scanning head 16 for scanning. For example, the robot 14 allows for scanning even surfaces having a normal direction which is perpendicular to the Z-direction in Fig. 1. As can be seen from Fig. 1, the robot 14 therefore allows for scanning surfaces being tilted with respect to each other by 90° or even more.

In the following it will be explained how the system 10 can be used for generating path data which allows for controlling the setting of the system 10 in order to scan the working 31 beam along a desired path with respect to the workpiece 38.

The setting of the system 10 comprises the setting of the robot i.e. the rotational positions with respect to axes A₁ to A₅, and the setting of the deflection optics 34. These settings determine the position and orientation of the measurement beam 30 and working beam 31, when provided, and create a projection of the measurement beam 30 or the working beam 31 at a corresponding position of the workpiece 38, when the workpiece 38 is provided below the laser scanning head 16. Accordingly, a path on the workpiece 38 can be defined by a sequence of settings of the robot 14 and the deflection optics 34.

Additionally but not necessarily, the setting of the system 10 can also comprise a setting of the focusing optics 36. In this case, a path which is defined by the setting of the system 10 with respect to the workpiece 38 can also extent out of the surface plane of the workpiece 38, if the path corresponds to a path of the focal positions of the working beam 31.

Referring to Fig. 1, the measurement beam 30 is scanned by the deflection optics 34 of the laser scanning head 16 comparatively fast in Y-direction and simultaneously by a movement of the robot 14 in X-direction with a comparatively low scanning speed.

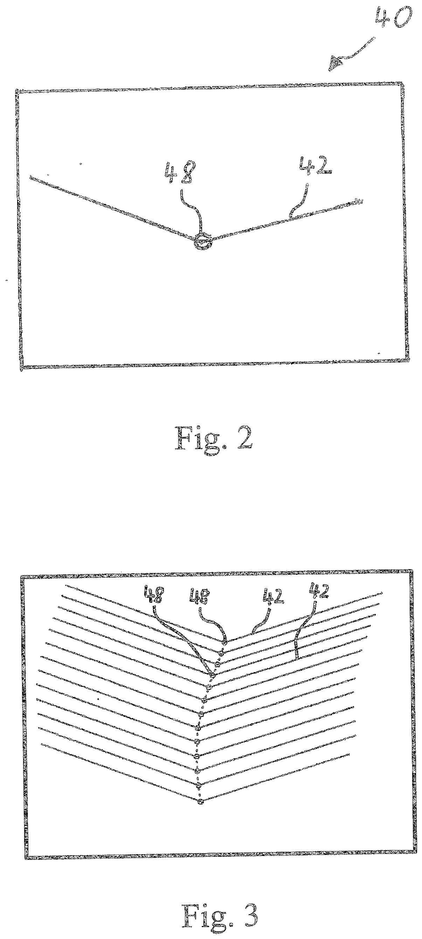

Fig. 2 shows a two-dimensional image 40 taken with the camera 18 during the scanning process illustrated in Fig. 1. The two-dimensional image 40 comprises a line 42 which represents a projection 44 of the measurement beam 30 on the workpiece 38, when the measurement beam 30 is scanned by the deflection optics 34 in Y-direction. In the example of Fig. 2, the integration time of the camera 18 is comparatively large with respect to the scanning in Y-direction and comparatively slow with respect to the scanning in X-direction. Accordingly, the image 40 comprises a line 42, instead of an area or a single dot as a representation of the projection 44 of the measurement beam 30.

In other examples, which are not shown, an image similar to that of Fig. 2 can be obtained by superposing multiple camera images, taken with a lower integration time of the camera 18. In these examples, each camera image comprises a dot instead of the line 42, wherein the superposition of all dots corresponds to the line 42 as shown in Fig. 2.

In the example of Fig. 1 the workpiece 38 corresponds to a sheet of metal which is bended, such that a bending line 46 is provided. The bending line 46 corresponds to a path on the workpiece 38 along which the 38 can be processed, cutting. Because the workpiece 38 is folded or bended upwards with respect to the bending line 46. The bending line 46 corresponds to a valley line or to a path of local minima along the surface of the workpiece 38. This surface profile of a valley is reflected in the projection 44 having a V-shape with a local minimum on the bending line 46. Because the camera 18 is tilted with respect to the center beam axis 24 corresponding to the Z-direction in Fig. 1, also the line 42 in the camera image 40 has a V-shape.

Based on the predefined criterion "local minimum in a line 42" the image 40 can be analyzed and a local minimum 48 and a position thereof in the two-dimensional image 40 can be determined. Based on the position of the local minimum 48 in the image 40 it is possible to determine the three-dimensional position of the intersection of the projection 44 and the bending line 46 in the XYZ coordinate system. This determination can be performed by use of triangulation, which requires that the camera 18 is spaced from the direction defined by the measurement beam 30 and inclined with respect to this direction. The three-dimensional position can thereby be determined based on the direction of the measurement beam 30 when pointing at the intersection between the bending line 46 and the projection 44 based on, the direction of the reflected measurement beam being reflected from the intersection to the camera, and based on the distance between the camera and the measurement beam 30.

In a similar way, it is possible to determine for every position on the line 42 in the two-dimensional camera image 40 the corresponding actual three-dimensional position on the projection 44 on the surface of the workpiece 38 in the XYZ coordinate system. The XYZ coordinate system can be used to describe the three-dimensional position and orientation of the workpiece 38 with respect to the system 10.

Fig. 3 shows a superposition of multiple camera images 40 which have been taken during the scanning of Fig. 1 for different scanning positions in X-direction. For each line 42 in Fig. 3 the image position of the corresponding local minimum 48 can be determined. From each determined image position the corresponding three-dimensional position on the bending line 46 on the surface of the workpiece 38 can be determined, as explained above. From these determined three-dimensional positions a three-dimensional path or coordinates representing the three-dimensional path can be generated and provided to the control unit 22. Based on these coordinates, which represent path data, the control unit 22 can control the laser scanning head 16, the robot 14 and the laser source 12 to scan the working beam 31 over the workpiece 38, such that the projection of the working beam 31 moves along the three-dimensional path which in this example corresponds to the path of the bending line 46. In this example, the three-dimensional scanning path for the working beam 31 corresponds to the path of the bending line 46.

It is noted that in other examples, other predefined criteria can be used which result in a three-dimensional path which does not correspond to a characteristic line in the surface profile of the workpiece 38, such as the bending line 46. For example it is possible to determine path positions based on image positions which are determined based on the predefined criterion, that the image position of interest corresponds to "a position on the line 42 and has a predefined distance from a local minimum 48 in a predefined direction (e.g. left or right)". In other examples, the path can have a predefined offset in the XYZ coordinate system with respect to the bending line 46. It is further noted that it is not even necessary that the path for scanning the working beam lies in the surface plane of the workpiece 38. In some examples, the path generated for scanning the working beam corresponds to a three-dimensional path of the focus positions of the working beam 31 which can be above or below the surface of the workpiece 38. This can be achieved by using a corresponding setting of the focusing optics 36, which is moveable in some examples.

It is further noted that the path data which allows for controlling the system 10, such that the working beam 31 is scanned along a corresponding three-dimensional path over the workpiece 38 does not necessarily correspond to the coordinates of this path. As explained for the above example, the path can be generated in terms of three-dimensional coordinates and based on these coordinates the control unit 22 can control the setting of the system accordingly. In other examples, however, the setting of the system 10 can be controlled without explicitly determining the coordinates of the three-dimensional path, because the setting can also be determined based on the setting which is used for scanning the measurement beam 30 over the workpiece 38 and based on the spatial relation between the measurement beam 30 and the working beam 31. In one example, the measurement beam 30 and the working beam coincide for the same setting, such that a setting which is used for a scanning of the measurement beam 30 can be used for the same scanning of the working beam.

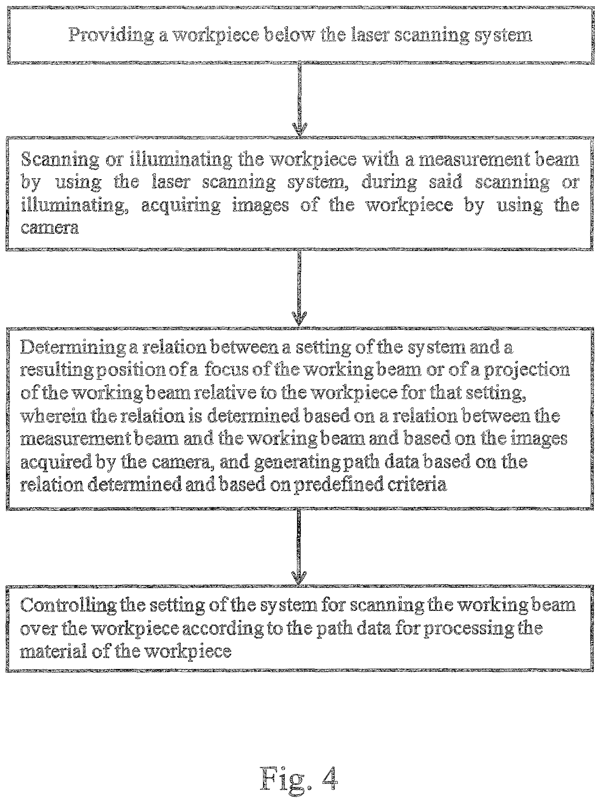

Fig. 4 illustrates the steps which can be performed to generate path data and to control the setting of the system 10 according to the generated path data.

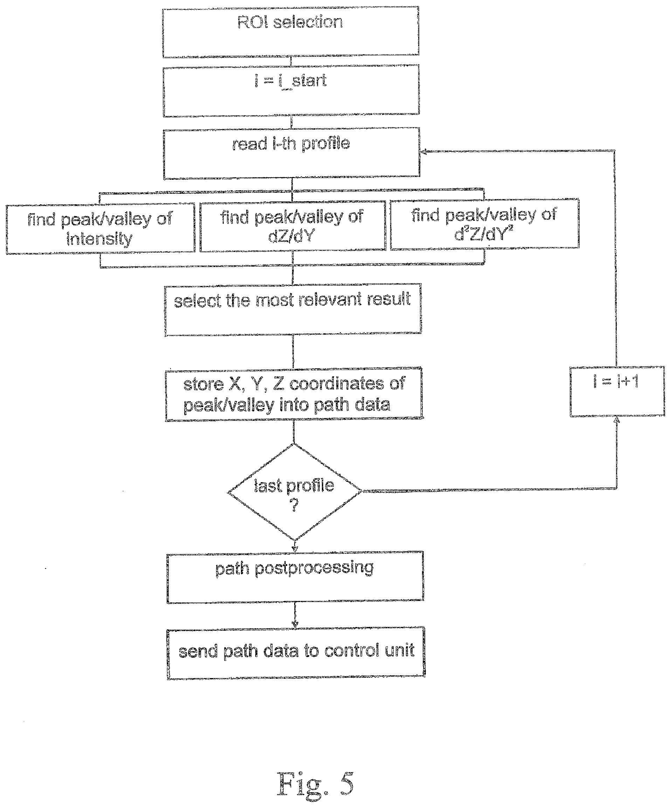

Fig. 5 illustrates a flow diagram showing an example of performing the third step of Fig. 4 (third box from above). In a first step, a region of interest (ROI) is selected. This can be performed manually, e.g. by selecting a certain area in the superpositioned images of Fig. 3 or by selecting a certain area on the workpiece 38. All further steps are preferably performed automatically by the processing unit 20 of the system 10.

In a next step, it is defined which of the lines 42 within the ROI is used as a starting point, e.g. a "first" line 42 if i=1. Then the first line or the camera image 40 containing the first line 42 is read and analyzed based on a predefined criterion. In the example of Fig. 5, six different predefined criteria are used, namely "peak/valley (or local maximum/local minimum) of intensity", "peak/valley of the first spatial derivation" of line 42 in image 40 and "peak/valley of the second spatial derivation" of line 42. Then the most relevant result is selected, e.g. based on a predefined threshold and/or on a predefined image region.

In a next step the X, Y and Z coordinates of a position corresponding to the image position of the predefined feature (e.g. valley of dZ/dY) are stored as a position of the path. Then the before-mentioned steps are repeated for the following lines 42 until the last line 42 has been read. Then the path positions are combined in a post processing to path data and the path data is sent to the control unit.

In the example of Fig. 1 to 3, the path generation is based on the determining a predefined feature (e.g. a local minimum), in the camera image 40 which is a result of the bending of the workpiece 38. In this example, the path generation relies on a bending line 46 in the profile of the workpiece 38.

It is noted, that in other examples, the predefined criteria must not rely on characteristic features in a three-dimensional surface profile, e.g. the predefined criterion of a "peak/valley intensity". This example can be used for workpieces corresponding to a combination of two plane metal sheets which have been loosely arranged side by side and abut each other. If the surface of such a workpiece is scanned similar as illustrated in Fig. 1, the camera image 40 will contain a straight line, wherein the intensity of the straight line will have a dip in the intensity at an image position corresponding to the transition from one metal sheet to the other metal sheet. In this example the path can be generated along the line at which the metal sheets but each other the generated path can be used for a laser welding to connect both metal sheets.

In other examples, a cutting line can be manually drawn on the workpiece, e.g. with a paint having a higher reflectivity than the material of the workpiece. In this case a "local maximum of the intensity" can be used as predefined feature to generate a path for a laser cutting process along the painted profile on the workpiece.

In still other examples, e.g. for engraving processes, the predefined feature can correspond to a predefined image or to predefined letters to be graved on the workpiece. In this case, the scanning of the measurement beam 30 can be used to generate data corresponding to a three-dimensional surface profile of the workpiece 38. In a next step, the predefined image can be combined with the surface profile to generate path data corresponding to the image and being adapted to the geometry and position of the specific workpiece below the laser scanning head 16.

Accordingly,, the laser scanning system 10 allows for a fast and accurate laser processing without need for time consuming path generation. The path can be generated automatically or almost automatically based on predefined criteria.

It is further possible to determine the three-dimensional topology of the workpiece before and after the laser processing by evaluating the camera images 40 using triangulation. This allows to compare the topologies and to assess the process quality based on differences in the topologies. These differences can be visualized, e.g. by colorizing the surface in accordance with distances. This allows for an easy visual assessment whether the process fulfils desired requirements or not, e.g. when showing undesired deformations.

Fig. 6 illustrates that the system 10 further allows an advantageous real time process monitoring, because the camera 18 is spaced from the center beam axis 24 and is inclined with respect to this axis. Fig. 6 illustrates a laser welding process in which the working beam 31 is scanned over a workpiece 52. The welding process creates a keyhole 54 in the workpiece 52 surrounded by a melt pool 56. If the intensity of the working beam 31 is too high a plasma plume 58 and a melt expulsion formed by melt droplets 60 can occur. The melt expulsion and the plasma plume 58 usually extend in the direction of the working beam 31 perpendicular or almost perpendicular to the workpiece 52. Because the camera 18 is spaced from the center beam axis 24 and tilted the view of the camera 18 on the keyhole 54 and on the melt pool 56 is not shielded or not completely shielded by the plasma plume 58 and the melt droplets 60, such that the laser process can be observed in real time and controlled, if necessary.

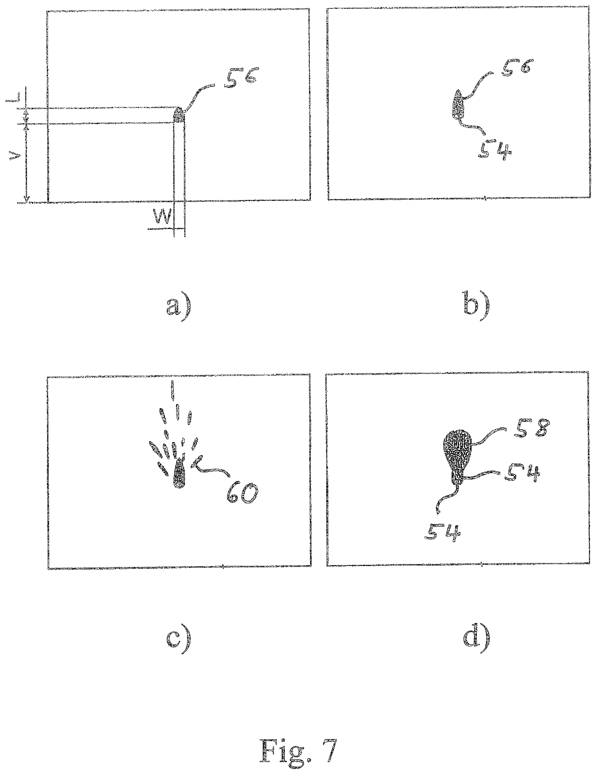

Fig. 7 shows camera images taken by the camera 18 in the arrangement illustrated of Fig. 6 for different welding processes and during different welding regimes. Fig. 7a) represents an image of a conduction welding process in a normal regime. Fig. 7b) to 7d) show images of a keyhole welding process in a normal regime (7b)), in a melt expulsion regime (7c)) and in plasma plume regime (7d)).

Referring to Fig. 7a), because the camera is spaced from the center beam axis 24 and inclined with respect to this axis it is possible to determine three-dimensional positions and distances in three-dimensional space of the acquired features. For example, it is possible to determine the width W of the melt pool 56 and the length L of the melt pool 56 by use of triangulation. Further it is possible to determine a vertical position or distance V of the melt pool 56 with respect to the laser scanning head 16. A determination of the vertical position would not be possible if the camera 18 would be arranged on the center beam axis 24. It is also possible to determine further process parameters, such as the size and the extension of the plasma plume 58, the size of the melt droplets 60 and the direction in which the drops 60 are expulsed.

Based on the monitoring it is possible to directly control the process in real time. For example, if the occurrence of melt droplets 60 (Fig. 7c)) or of a plasma plumes (Fig. 7d)) is observed the system 10 can be controlled in order to reduce the intensity of the working beam 50 at the workpiece. This can be achieved by shifting the focus or by reducing the power.

Because the camera 18 has a tilted view onto the process, it is still possible to monitor the keyhole 54 and the melt pool 56 or at least portions thereof in case of the occurrence of a plasma plume 58 or melt expulsion, as can be seen from Fig. 7d) and 7c).

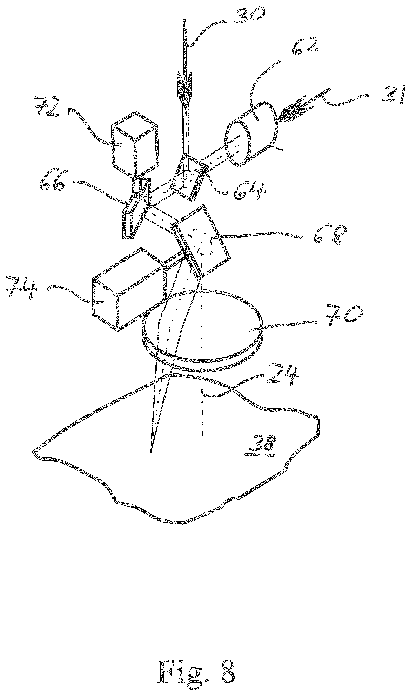

While for the exemplary laser scanning head 16 of Fig. 6 only two internal components, namely the deflection optics 34 and the focusing optics 36, are shown for the purpose of illustration, Fig. 8 illustrates an internal arrangement of the optics of another exemplary laser scanning head according to a furhter embodiment. The laser scanning head of Fig. 8 compris-es a moveable focusing optics 62, a beam combiner 64, two deflecting mirrors 66, 68 and a focusing lens 70. Different from one of the before-mentioned examples of the laser scanning head 16, the focusing lens 70 of the laser scanning head of Fig. 8 is fixed and not moveable. However, for adjusting the focus position of the working beam 31, when the working beam 31 is scanned over the workpiece 38, the moveable focusing optics 62 is provided.

The beam combiner 64 is at least partially reflective for the measurement beam 30 and at least partially transparent for the working beam 31. The sources of the measurement beam 30 and the working beam 31 and the beam combiner 64 are arranged, such that the measurement beam and the working beam 31 coincide behind the beam combiner 64, if these beams 31, 30 would be generated simultaneously. Both beams 30, 31 are reflected by both mirrors 66, 68 and projected through the lens 70 onto the workpiece 38.

Each of the deflecting mirrors 66, 68 is associated with a corresponding actuator 72 and 74, respectively. The actuators 72 and 74 can rotate the corresponding mirror 66, 68, which allows for scanning the measurement beam 30 and the working beam 31 over the workpiece 38.

While the invention has been described with reference to illustrative examples and embodiments, these examples and embodiments are not intended to limit the scope of the present invention. The scope of the present invention is defined by the appended claims.

### LIST OF REFERENCE SIGNS

- 10: System
- 12: Laser Source
- 14: Robot
- 16: Laser Scanning Head
- 18: Camera
- 20: Processing Unit
- 22: Control Unit
- 24: Center Beam Axis
- 26: Viewing Axis
- 28: Image Plane
- 30: Measurement Beam
- 31: Working Beam
- 32: Optical Fiber
- 34: Deflection Optics
- 36: Focusing Optics
- 38,52: Workpiece
- 40: Camera Image
- 42: Line
- 44: Projection
- 46: Bending Line
- 48: Local Minimum
- 54: Keyhole
- 56: Melt Pool
- 58: Plasma Plume
- 60: Melt Droplet
- 62: Focusing Optics
- 64: Beam Combiner
- 66, 68: Deflecting Mirrors
- 70: Focusing lens
- 72, 74: Actuators

## Claims

1. A system (10) for laser processing of a workpiece (38, 52), the system comprising
- a laser source (12) for generating a working beam (31), wherein the laser source is further configured for generating a measurement beam (30) or wherein the system comprises a further optical source for generating a measurement beam (30),
- a laser scanning system (16) defining a center beam axis (24) and being both configured for scanning the working beam (31) over the workpiece (38, 52) and for scanning the measurement beam (30) over the workpiece,
- a camera (18) which is
inclined to the center beam axis (24),
spaced from the center beam axis (24) and
arranged in a fixed relation to the laser scanning system (16),
- a robot (14) configured for moving the laser scanning system (16),
- a processing unit (20) configured
- to determine a relation between a setting of the system (10) and a resulting position of a focus of the working beam or of a projection of the working beam (31) relative to the workpiece (38, 52) for that setting, based on a spatial relation between the working beam (31) and the measurement beam (30) and based on a camera image (40) of the workpiece (38, 52) taken when the workpiece is scanned by the measurement beam (30), and
- to generate path data based on said determined relation and based on predefined criteria,
- a control unit (22) configured to
- control the setting of the system (10) for scanning the working beam (31) over the workpiece (38, 52) according to the path data for processing the material of the workpiece.

2. The system (10) of claim 1, wherein laser processing comprises at least one of laser welding, laser cutting, laser marking and laser engraving.

3. The system of claim 1 or 2, wherein the predefined criteria comprise
- predefined features (48) in one or more images (40) of the workpiece (38, 52) illuminated or scanned with the measurement beam (30) taken by said camera (18), and/or
- predefined path information.

4. The system (10) of one of the preceding claims, wherein the setting of the system comprises a setting of
- a deflection optics (34, 66, 68) of the laser scanning system (16),
- a focusing optics (36, 62) of the laser scanning system (16), and/or
- the robot (14).

5. The system (10) of one of the preceding claims, which further comprises a monitoring unit for monitoring the laser processing process by using the camera (18).

6. The system (10) of claim 5, which further comprises a process control unit for controlling the focusing and/or the power of the working beam (31) based on a monitoring of the monitoring unit.

7. The system (10) of one of the preceding claims, wherein the processing unit is further configured to determine a 3D topology of the workpiece (38, 52) based on a spatial relation between the measurement beam (30) and the camera (18) and based on at least one camera image (40) of the workpiece (38, 52) taken when the measurement beam (30) is scanned over the workpiece.

8. The system (10) of claim 7, which further comprises an evaluation unit for comparing a 3D topology of the workpiece (38, 52) before and after the laser processing.

9. The system (10) of claim 8, which further comprises a display unit for visualizing a difference between the compared topologies.

10. The system (10) of one of the preceding claims, wherein the power of the measurement beam (30) is lower than the power of the working beam (31).

11. The system (10) of one of the preceding claims, which is arranged, such that for a given setting of the system (10) the measurement beam (30) and the working beam (31) leave the laser scanning system on the same path.

12. The system (10) of one of the preceding claims, wherein the laser source (12) is a fiber laser and the measurement beam (30) and the working beam (31) use a common fiber.

13. A method for laser processing of a workpiece (38, 52) by use of a system (10) comprising a laser scanning system (16), a camera (18) and a robot (14), wherein the camera is inclined to a center beam axis (24) defined by the laser scanning system (16), is spaced from the center beam axis and is arranged in a fixed relation to the laser scanning system, wherein the method comprises:
- providing a workpiece (38, 52) below the laser scanning system (16),
- scanning or illuminating the workpiece with a measurement beam (30) by using the laser scanning system (16),
- during said scanning or illuminating, acquiring images (40) of the workpiece (38, 52) by using the camera (18),
- determining a relation between a setting of the system (10) and a resulting position of a focus of a working beam (31) or of a projection of the working beam relative to the workpiece (38, 52) for that setting, wherein the relation is determined based on a relation between the measurement beam (30) and the working beam (31) and based on the images (40) acquired by the camera (18),
- generating path data based on the relation determined and based on predefined criteria,
- controlling the setting of the system (10) for scanning the working beam (31) over the workpiece (38, 52) according to the path data for processing the material of the workpiece, wherein the scanning of the working beam (31) is performed using said laser scanning system (16).

14. The method of claim 13, wherein the steps of determining a relation and generating path data comprise
- discerning features (42) in one or more images (40) of the workpiece, wherein said one or more images are taken by said camera (18), when the workpiece (38, 52) is illuminated or scanned with the measurement beam (30),
- determining from said discerned features (42) a characteristic feature based on a comparison with a predefined feature (48),
- determining a setting of the system (10) for the working beam (31), wherein said setting is determined based on a position of the characteristic feature (48) in said one or more images (40) taken by the camera (18).

15. The method of claims 13 or 14, wherein the steps of scanning the measurement beam (30) and/or the working beam (31) are performed by the laser scanning system (16) and by the robot (14).

## Patentansprüche

1. System (10) zur Laserbearbeitung eines Werkstücks (38, 52), wobei das System Folgendes umfasst
- eine Laserquelle (12) zum Erzeugen eines Arbeitsstrahls (31), wobei die Laserquelle ferner zum Erzeugen eines Messstrahls (30) konfiguriert ist oder wobei das System eine weitere optische Quelle zum Erzeugen eines Messstrahls (30) umfasst,
- ein Laserabtastsystem (16), das eine Mittelstrahlachse (24) definiert und sowohl zum Abtasten des Arbeitsstrahls (31) über das Werkstück (38, 52) als auch zum Abtasten des Messstrahls (30) über das Werkstück konfiguriert ist,
- eine Kamera (18), die zur Mittelstrahlachse (24) geneigt ist, die von der Mittelstrahlachse (24) beabstandet ist, und die in einer festen Beziehung zum Laserabtastsystem (16) angeordnet ist,
- einen Roboter (14), der zum Bewegen des Laserabtastsystems (16) konfiguriert ist,
- eine Prozessoreinheit (20), die dazu konfiguriert ist,
- eine Beziehung zwischen einer Einstellung des Systems (10) und einer resultierenden Fokuslage des Arbeitsstrahls oder einer Projektion des Arbeitsstrahls (31) in Bezug auf das Werkstück (38, 52) für diese Einstellung basierend auf einer räumlichen Beziehung zwischen dem Arbeitsstrahl (31) und dem Messstrahl (30) und basierend auf einem Kamerabild (40) des Werkstücks (38, 52), das beim Abtasten des Werkstücks durch den Messstrahl (30) aufgenommen wird, zu ermitteln und
- Pfad-Daten basierend auf der ermittelten Beziehung und basierend auf vorbestimmten Kriterien zu generieren,
- eine Steuereinheit (22), die dazu konfiguriert ist,
- die Einstellung des Systems (10) zum Abtasten des Arbeitsstrahls (31) über das Werkstück (38, 52) gemäß den Pfad-Daten zur Bearbeitung des Materials des Werkstücks zu steuern.

2. System (10) nach Anspruch 1, wobei die Laserbearbeitung zumindest eines von Folgenden umfasst: Laserschweißen, Laserschneiden, Lasermarkieren und Lasergravieren umfasst.

3. System nach Anspruch 1 oder 2, wobei die vorbestimmten Kriterien Folgendes umfassen:
- vorbestimmte Merkmale (48) in einem oder mehreren von der Kamera (18) aufgenommenen Bildern (40) des Werkstücks (38, 52), bei denen das Werkstück mit dem Messstrahl (30) abgetastet oder beleuchtet wird, und/oder
- vorbestimmte Pfadinformationen.

4. System (10) nach einem der vorhergehenden Ansprüche, wobei die Einstellung des Systems eine Einstellung von
- einer optischen Ablenkeinheit (34, 66, 68) des Laserabtastsystems (16),
- einer optischen Fokussiervorrichtung (36, 62) des Laserabtastsystems (16), und/oder
- dem Roboter (14).

5. System (10) nach einem der vorhergehenden Ansprüche, das ferner eine Überwachungseinheit zum Überwachen des Laserbearbeitungsprozesses unter Verwendung der Kamera (18) umfasst.

6. System (10) nach Anspruch 5, das ferner eine Prozesssteuereinheit zum Steuern der Fokussierung und/oder der Leistung des Arbeitsstrahls (31) basierend auf einer Überwachung der Überwachungseinheit umfasst.

7. System (10) nach einem der vorhergehenden Ansprüche, wobei die Prozessoreinheit ferner dazu konfiguriert ist, eine 3D-Topologie des Werkstücks (38, 52) basierend auf einer räumlichen Beziehung zwischen dem Messstrahl (30) und der Kamera (18) und basierend auf mindestens einem Kamerabild (40) des Werkstücks (38, 52), das beim Abtasten des Werkstücks durch den Messstrahl (30) aufgenommen wird, zu ermitteln.

8. System (10) nach Anspruch 7, das ferner eine Auswertungseinheit zum Vergleichen einer 3D-Topologie des Werkstücks (38, 52) vor und nach der Laserbearbeitung umfasst.

9. System (10) nach Anspruch 8, das ferner eine Anzeigeeinheit zum Visualisieren einer Differenz zwischen den verglichenen Topologien umfasst.

10. System (10) nach einem der vorhergehenden Ansprüche, wobei die Leistung des Messstrahls (30) geringer als die Leistung des Arbeitsstrahls (31) ist.

11. System (10) nach einem der vorhergehenden Ansprüche, das derart angeordnet ist, dass bei einer gegebenen Einstellung des Systems (10) der Messstrahl (30) und der Arbeitsstrahl (31) über den gleichen Pfad aus dem Laserabtastsystem austreten.

12. System (10) nach einem der vorhergehenden Ansprüche, wobei die Laserquelle (12) ein Faserlaser ist und der Messstrahl (30) und der Arbeitsstrahl (31) eine gemeinsame Faser verwenden.

13. Verfahren zur Laserbearbeitung eines Werkstücks (38, 52) unter Verwendung eines Systems (10), das ein Laserabtastsystem (16), eine Kamera (18) und einen Roboter (14) umfasst, wobei die Kamera zu einer durch das Laserabtastsystem (16) definierten Mittelstrahlachse (24) geneigt ist, von der Mittelstrahlachse beabstandet ist und in einer festen Beziehung zu dem Laserabtastsystem angeordnet ist, wobei das Verfahren Folgendes umfasst:
- Bereitstellen eines Werkstücks (38, 52) unterhalb des Laserabtastsystems (16),
- Abtasten oder Beleuchten des Werkstücks mit einem Messstrahl (30) unter Verwendung des Laserabtastsystems (16),
- Erfassen von Bildern (40) des Werkstücks (38, 52) während des Abtastens oder Beleuchtens unter Verwendung der Kamera (18),
- Ermitteln einer Beziehung zwischen einer Einstellung des Systems (10) und einer resultierenden Fokuslage eines Arbeitsstrahls (31) oder einer Projektion des Arbeitsstrahls in Bezug auf das Werkstück (38, 52) für diese Einstellung, wobei die Beziehung basierend auf einer Beziehung zwischen dem Messstrahl (30) und dem Arbeitsstrahl (31) und basierend auf den von der Kamera (18) aufgenommenen Bildern (40) bestimmt wird,
- Generieren von Pfad-Daten basierend auf der ermittelten Beziehung und basierend auf vorbestimmten Kriterien,
- Steuern der Einstellung des Systems (10) zum Abtasten des Arbeitsstrahls (31) über das Werkstück (38, 52) gemäß den Pfad-Daten zum Verarbeiten des Materials des Werkstücks, wobei das Abtasten des Arbeitsstrahls (31) unter Verwendung des Laserabtastsystems (16) durchgeführt wird.

14. Verfahren nach Anspruch 13, wobei die Schritte des Ermittelns einer Beziehung und des Generierens von Pfaddaten Folgendes umfassen:
- Merkmale (42) in einem oder mehreren Bildern (40) des Werkstücks zu identifizieren, wobei das eine oder die mehreren Bilder von der Kamera (18) aufgenommen werden, während das Werkstück (38, 52) mit dem Messstrahl (30) abgetastet oder beleuchtet wird,
- Ermitteln eines kennzeichnenden Merkmals aus den identifizierten Merkmalen (42) basierend auf einem Vergleich mit einem vorbestimmten Merkmal (48),
- Ermitteln einer Einstellung des Systems (10) für den Arbeitsstrahl (31), wobei die Einstellung basierend auf einer Position des kennzeichnenden Merkmals (48) in dem einem oder den mehreren Bildern (40) ermittelt wird, die von der Kamera (18) aufgenommen wurden.

15. Verfahren nach Anspruch 13 oder 14, wobei die Schritte des Abtastens des Messstrahls (30) und/oder des Arbeitsstrahls (31) von dem Laserabtastsystem (16) und dem Roboter (14) durchgeführt werden.

## Revendications

1. Système (10) pour le traitement au laser d'une pièce (38, 52), le système comprenant :
- une source laser (12) pour générer un faisceau de travail (31), dans lequel la source laser est en outre configurée pour générer un faisceau de mesure (30) ou dans lequel le système comprend une source optique supplémentaire pour générer un faisceau de mesure (30),
- un système de balayage laser (16) définissant un axe de faisceau central (24) et qui est configuré à la fois pour balayer le faisceau de travail (31) sur la pièce (38, 52) et pour balayer le faisceau de mesure (30) sur la pièce,
- une caméra (18) qui est
inclinée par rapport à l'axe de faisceau central (24),
espacée de l'axe de faisceau central (24) et agencée dans une relation fixe par rapport au système de balayage laser (16),
- un robot (14) configuré pour déplacer le système de balayage laser (16),
- une unité de traitement (20) configurée
- pour déterminer une relation entre un réglage du système (10) et une position résultante d'un foyer du faisceau de travail ou d'une projection du faisceau de travail (31) par rapport à la pièce (38, 52) pour ce réglage, sur la base d'une relation spatiale entre le faisceau de travail (31) et le faisceau de mesure (30) et sur la base d'une image de caméra (40) de la pièce (38, 52) prise lorsque la pièce est balayée par le faisceau de mesure (30), et
- pour générer des données de trajet sur la base de ladite relation déterminée et sur la base de critères prédéfinis,
- une unité de commande (22) configurée pour
- commander le réglage du système (10) pour balayer le faisceau de travail (31) sur la pièce (38, 52) conformément aux données de trajet pour traiter le matériau de la pièce.

2. Système (10) selon la revendication 1, dans lequel le traitement au laser comprend au moins l'un d'un soudage au laser, d'un usinage au laser, d'un marquage au laser et d'une gravure au laser.

3. Système selon la revendication 1 ou 2, dans lequel les critères prédéfinis comprennent :
- des caractéristiques prédéfinies (48) dans une ou plusieurs images (40) de la pièce (38, 52) éclairée ou balayée avec le faisceau de mesure (30) prises par ladite caméra (18), et/ou
- des informations de trajet prédéfinies.

4. Système (10) selon l'une des revendications précédentes, dans lequel le réglage du système comprend un réglage
- d'une optique de déflexion (34, 66, 68) du système de balayage laser (16),
- d'une optique de focalisation (36, 62) du système de balayage laser (16), et/ou
- du robot (14).

5. Système (10) selon l'une des revendications précédentes, qui comprend en outre une unité de surveillance pour surveiller le processus de traitement au laser en utilisant la caméra (18).

6. Système (10) selon la revendication 5, qui comprend en outre une unité de commande de processus pour commander la focalisation et/ou la puissance du faisceau de travail (31) sur la base d'une surveillance de l'unité de surveillance.

7. Système (10) selon l'une des revendications précédentes, dans lequel l'unité de traitement est en outre configurée pour déterminer une topologie 3D de la pièce (38, 52) sur la base d'une relation spatiale entre le faisceau de mesure (30) et la caméra (18) et au moins sur la base d'une image de caméra (40) de la pièce (38, 52) prise lorsque le faisceau de mesure (30) est balayé sur la pièce.

8. Système (10) selon la revendication 7, qui comprend en outre une unité d'évaluation pour comparer une topologie 3D de la pièce (38, 52) avant et après le traitement au laser.

9. Système (10) selon la revendication 8, qui comprend en outre une unité d'affichage pour visualiser une différence entre les topologies comparées.

10. Système (10) selon l'une des revendications précédentes, dans lequel la puissance du faisceau de mesure (30) est inférieure à la puissance du faisceau de travail (31).

11. Système (10) selon l'une des revendications précédentes, qui est agencé de sorte que, pour un réglage donné du système (10), le faisceau de mesure (30) et le faisceau de travail (31) quittent le système de balayage laser sur le même trajet.

12. Système (10) selon l'une des revendications précédentes, dans lequel la source laser (12) est un laser à fibre et le faisceau de mesure (30) et le faisceau de travail (31) utilisent une fibre commune.

13. Procédé pour le traitement au laser d'une pièce (38, 52) en utilisant un système (10) comprenant un système de balayage laser (16), une caméra (18) et un robot (14), dans lequel la caméra est inclinée par rapport à un axe de faisceau central (24) défini par le système de balayage laser (16), est espacée de l'axe de faisceau central et est agencée dans une relation fixe par rapport au système de balayage laser,
dans lequel le procédé comprend :
- la fourniture d'une pièce (38, 52) au-dessous du système de balayage laser (16),
- le balayage ou l'éclairage de la pièce avec un faisceau de mesure (30) en utilisant le système de balayage laser (16),
- pendant ledit balayage ou ledit éclairage, l'acquisition d'images (40) de la pièce (38, 52) en utilisant la caméra (18),
- la détermination d'une relation entre un réglage du système (10) et une position résultante d'un foyer d'un faisceau de travail (31) ou d'une projection du faisceau de travail par rapport à la pièce (38, 52) pour ce réglage, dans lequel la relation est déterminée sur la base d'une relation entre le faisceau de mesure (30) et le faisceau de travail (31) et sur la base des images (40) acquises par la caméra (18),
- la génération de données de trajet sur la base de la relation déterminée et sur la base de critères prédéfinis,
- la commande du réglage du système (10) pour balayer le faisceau de travail (31) sur la pièce (38, 52) conformément aux données de trajet pour traiter le matériau de la pièce, dans lequel le balayage du faisceau de travail (31) est effectué en utilisant ledit système de balayage laser (16).

14. Procédé selon la revendication 13, dans lequel les étapes de détermination d'une relation et de génération de données de trajet comprennent :
- la détection de caractéristiques (42) dans une ou plusieurs images (40) de la pièce, dans lequel lesdites une ou plusieurs images sont prises par ladite caméra (18), lorsque la pièce (38, 52) est éclairée ou balayée avec le faisceau de mesure (30),
- la détermination, à partir desdites caractéristiques détectées (42), d'une caractéristique fondamentale sur la base d'une comparaison avec une caractéristique prédéfinie (48),
- la détermination d'un réglage du système (10) pour le faisceau de travail (31), dans lequel ledit réglage est déterminé sur la base d'une position de la caractéristique fondamentale (48) dans lesdites une ou plusieurs images (40) prises par la caméra (18).

15. Procédé selon la revendication 13 ou 14, dans lequel les étapes de balayage du faisceau de mesure (30) et/ou du faisceau de travail (31) sont effectuées par le système de balayage laser (16) et par le robot (14).
